# EUROPEAN PATENT SPECIFICATION

(11) **EP 4 424 422 B1**
(45) Date of publication and mention of the grant of the patent: **29.04.2026**
(21) Application number: 23209639.6
(22) Date of filing: 14.11.2023
(51) Int. Cl.: B05B 1/20, B05B 15/65, H01M 10/653, B05B 13/04

(54) **INJECTION NOZZLE**
EINSPRITZDÜSE
BUSE D'INJECTION

(30) Priority: 28.02.2023 KR 20230026760
(43) Date of publication of application: 04.09.2024
(73) Proprietor: Samsung SDI Co., Ltd., Yongin-si, Gyeonggi-do 17084 (KR)
(72) Inventor: Kim, Gangyul, 17084 Yongin-si, Gyeonggi-do (KR)
(74) Representative: Gulde & Partner

(56) References cited:
- KR-B1- 101 389 733
- US-A- 6 015 099
- US-B1- 7 137 269
- US-B2- 10 427 651

## Description

### BACKGROUND

### (a) Field

The present disclosure relates to an injection nozzle.

### (b) Description of the Related Art

A rechargeable battery is a battery that repeatedly performs charging and discharging.

A conventional rechargeable battery is formed of a unit cell, a module, a pack, and the like, including a rechargeable battery housing that accommodates an electrode assembly.

A conventional rechargeable battery housing performs cooling by contacting a heat exchange member including cooling water, and the like, and a thermal interface material (TIM) is sprayed on the surface of the rechargeable battery housing to improve heat conduction performance.

However, the rechargeable battery housing has various surface areas depending on the shape and size of the rechargeable battery, and thus it is difficult to spray the thermal interface material on the surface of various rechargeable battery housings having various surface areas using one injection nozzle. Examples may be found in KR101389733B1, US 6,015,099 A1, US 7,137,269 B1 or US 10,427,651 B2.

### SUMMARY

An embodiment seeks to provide an injection nozzle that easily injects a heat exchange material onto the surface of various rechargeable battery housings having various surface areas.

One aspect of the present disclosure relates to a modular injection nozzle for injecting a thermal interface material (TIM) onto a surface of a rechargeable battery housing along an injecting direction. The modular injection nozzle includes: a main nozzle adapted for receiving the thermal interface material from the outside and adapted for injecting the thermal interface material onto the surface of the rechargeable battery housing; and a plurality of sub nozzles that are detachably coupled to the main nozzle in a lateral direction, i.e. in a direction perpendicular to the injecting direction, each sub nozzle being adapted for receiving the thermal interface material from the main nozzle, and adapted for injecting the thermal interface material onto the surface of the rechargeable battery housing.

The plurality of sub nozzles may be coupled to the main nozzle in a number corresponding to a width of the surface of the rechargeable battery housing along the lateral direction.

The main nozzle includes: an inflow hole that receives the thermal interface material from the outside; an injection hole that sprays the thermal interface material supplied through the inflow hole to the surface of the rechargeable battery housing; and a main nozzle body that communicates between the inflow hole and the injection hole.

Further, a width of the lateral direction of an inner space of the main nozzle is reduced as it goes from the inflow hole through the main nozzle body to the injection hole. In other words, the flow cross-sectional area of the main nozzle may taper (decreases) from the inflow hole over the main nozzle body to the injection hole.

The main nozzle may further include: a first main coupling portion protruded in the lateral direction from a first portion of the main nozzle body and combined with an adjacent first sub nozzle among the plurality of sub nozzles; and a second main coupling portion protruded in the lateral direction from the second portion of the main nozzle body disposed on the opposite side of the first portion in the transverse direction and combined with an adjacent second sub nozzle among the plurality of sub nozzles.

The first sub nozzle may include: a first sub coupling portion that is coupled to the first main coupling portion and receives the thermal interface material from the main nozzle body; a first sub injection hole that sprays the thermal interface material supplied to the first sub coupling portion to the rechargeable battery housing surface; and a first sub nozzle body that communicates between the first sub coupling portion and the first sub injection hole.

The first main coupling portion may be inserted into the first sub coupling portion.

The first main coupling portion may be screwed with the first sub coupling portion.

The first sub nozzle may further include a first extension coupling portion that is protruded in the transverse direction from a portion of the first sub nozzle body disposed on the opposite side of the first sub coupling portion in the lateral direction and combined (coupled) with an adjacent third sub nozzle among the plurality of sub nozzles.

The third sub nozzle may include a third sub coupling portion coupled to the first extension coupling portion and receiving the thermal interface material supply from the first sub nozzle body; a third sub injection hole that inject (sprays) the thermal interface material supplied to the third sub coupling portion to the surface of the rechargeable battery housing; and a third sub nozzle body that communicates between the third sub coupling portion and the third sub injection hole.

The first extension coupling portion may be inserted into the third sub coupling portion.

The first extension coupling portion may be screwed with the third sub coupling portion.

The third sub nozzle may further include a third extension coupling portion protruded in the lateral direction from a portion of the third sub nozzle body disposed on the opposite side of the lateral direction of the third sub coupling portion, and the injection nozzle may further include a first nozzle cap coupled to the third extension coupling portion.

The second sub nozzle may include: a second sub coupling portion that is combined (coupled) with the second main coupling portion and receives the thermal interface material supply from the main nozzle body; a second sub injection hole that injects (sprays) the thermal interface material supplied to the second sub coupling portion to the surface of the rechargeable battery housing; and a second sub nozzle body that communicates between the second sub coupling portion and the second sub injection hole.

The second main coupling portion may be an injection nozzle inserted into the second sub coupling portion.

The second main coupling portion may be screwed with the second sub coupling portion.

The second sub nozzle may further include a second extension coupling portion protruded in the lateral direction from a portion of the second sub nozzle body disposed on the opposite side of the lateral direction of the second sub coupling portion and combined (coupled) with an adjacent fourth sub nozzle among the plurality of sub nozzles.

The fourth sub nozzle may include: a fourth sub coupling portion that is coupled to the second extension coupling portion and receives the thermal interface material from the second sub nozzle body; a fourth sub injection hole that injects (spraying) the thermal interface material supplied to the fourth sub coupling portion to the surface of the rechargeable battery housing; and a fourth sub nozzle body that communicates between the fourth sub coupling portion and the fourth sub injection hole.

The second extension coupling portion may be inserted into the fourth sub coupling portion, and the second extension coupling portion may be screwed with the fourth sub coupling portion.

The fourth sub nozzle may further include a fourth extension coupling portion protruded in the lateral direction from a portion of the fourth sub nozzle body disposed on the opposite side of the fourth sub coupling portion in the transverse direction, and the injection nozzle further includes a second nozzle cap combined (coupled) with the fourth extension coupling portion.

According to the embodiment, the injection nozzle for easily injecting (spraying) a heat exchange material onto surfaces of various rechargeable battery housings having various surface areas can be provided.

### BRIEF DESCRIPTION OF THE DRAWINGS

FIG. 1 is a perspective view of an injection nozzle that injects (sprays) a thermal interface material on a surface of a rechargeable battery housing according to an embodiment.
FIG. 2 is a perspective view of the injection nozzle according to an embodiment.
FIG. 3 is a cross-sectional view along III-III of FIG. 2.
FIG. 4 shows a coupling portion of the injection nozzle according to an embodiment.
FIG. 5 is a perspective view of examples of the injection nozzle according to an embodiment.

### DETAILED DESCRIPTION OF THE EMBODIMENTS

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure, this scope being defined by the scope of the appended claims.

For example, unless explicitly described to the contrary, the word "comprise", and variations such as "comprises" or "comprising", will be understood to imply the inclusion of stated elements but not the exclusion of any other elements.

One aspect of the present disclosure relates to an injection nozzle 1000 for spraying a thermal interface material (TIM) to a surface of a rechargeable battery housing. The injection nozzle 1000 is modular including the following elements:
The injection nozzle 1000 includes: a main nozzle 100 and a plurality of sub nozzles 200 that are coupled to the main nozzle 100 in a lateral direction (i.e. a direction perpendicular to the spraying direction). The main nozzle 100 is adapted to receive the thermal interface material from the outside (from an external source) and to spray the thermal interface material to the surface of the rechargeable battery housing. The plurality of sub nozzles are adapted to receive the thermal interface material from the main nozzle 100, and adapted to spray the thermal interface material to the surface of the rechargeable battery housing.

The plurality of sub nozzles 200 are detachably coupled with the main nozzle and/or the sub nozzles. This has the advantage of a more variable modifiability of the injection nozzle 1000 in terms of a simplified separation and recombination on demand, i.e. depending on the surface size to be sprayed.

The injection nozzle 1000 may further include a first nozzle cap 300 and a second nozzle cap 400 coupled to the main nozzle and/or the sub nozzles. The first and second nozzle caps may have a (female) thread. The first and second nozzle caps may be detachably coupled with the main nozzle and/or the sub nozzles in order to enable separation and recombination on demand.

In one embodiment, the main nozzle 100 may be directly coupled to at least one sub nozzle of the plurality of sub nozzles 200, and on the opposing side of this sub nozzle, where it is directly coupled to the main nozzle 100, the at least one sub nozzle is directly coupled to one further sub nozzle. In other words, one sub nozzle may be directly coupled to the main nozzle 100 and one or more sub nozzles may be indirectly coupled to the main nozzle 100 in series with the directly coupled sub nozzle.

In a preferred embodiment, the main nozzle 100 may be directly coupled to a single first sub nozzle 210 of the plurality of sub nozzles 200, and this single first sub nozzle 210 is directly coupled to a single further third sub nozzle 230 on the opposing side of the first sub nozzle 210, where it is directly coupled to the main nozzle 100.

In one further embodiment, two of the plurality of sub nozzles 200 are directly coupled to the main nozzle 100 on opposing sides of the main nozzle 100, and one (or more) sub nozzles may be indirectly coupled to the main nozzle 100 in series with at least one of the directly coupled sub nozzles. Herein the term "coupled" means, for instance, the main nozzle being (detachably) connected to a first sub nozzle allowing a thermal interface material flowing from the main nozzle to the first sub nozzle.

Herein the term "injecting" is understood as spray-injecting or spraying.

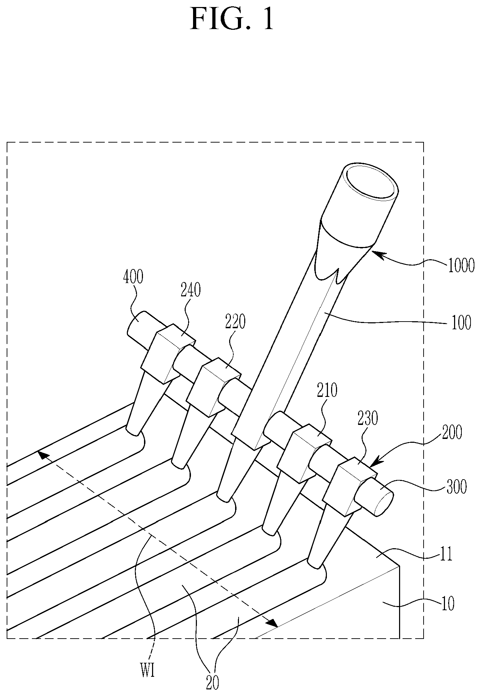

Hereinafter, referring to FIG. 1 to FIG. 5, an injection nozzle according to an embodiment will be described.

FIG. 1 is a perspective view of an injection nozzle that injects a thermal interface material on a surface of a rechargeable battery housing according to an embodiment.

Referring to FIG. 1, an injection nozzle 1000 according to an embodiment injects a thermal interface material (TIM) on a surface 11 of a rechargeable battery housing 10 that forms a unit cell, a module, or a pack.

A thermal interface material 20 sprayed onto a surface 11 of the rechargeable battery housing 10 by the injection nozzle 1000 according to an embodiment may include silicon, urethane, acryl, and the like, but is not limited thereto, and various known thermal interfaces material may be included.

The injection nozzle 1000 according to an embodiment includes a main nozzle 100 for injecting the thermal interface material 20 onto the surface 11 of the rechargeable battery housing 10 by receiving the thermal interface material 20 from the outside, and a plurality of sub nozzles 200 coupled in the horizontal direction to the main nozzle 100, receiving the thermal interface material 20, and injecting the thermal interface material 20 onto the surface 11 of the rechargeable battery housing 10. In other words, the injection nozzle 1000 is suitable for spraying a thermal interface material (TIM) to a surface of a rechargeable battery housing, comprising: a main nozzle 100 adapted for receiving the thermal interface material from the outside and for spraying the thermal interface material to the surface of the rechargeable battery housing; and a plurality of sub nozzles 200, 210, 220 that are coupled to the main nozzle 100 in a lateral direction, adapted for receiving the thermal interface material from the main nozzle 100, and adapted for spraying the thermal interface material to the surface of the rechargeable battery housing. For example, the main nozzle 100 may be connected to a nozzle moving means such as an external pipe and a robot arm, but is not limited thereto. For example, the main nozzle 100 may be connected to a nozzle feeding means such as a pump. The plurality of sub nozzles 200 are coupled to the main nozzle 100 with a number corresponding to a width WI of the surface 11 of the rechargeable battery housing 10 along the horizontal direction, and sprays the thermal interface material 20 to the surface 11 of the rechargeable battery housing 10 together with the main nozzle 100. As the plurality of sub nozzles 200 are coupled to the main nozzle 100 in a number corresponding to the width WI of the surface 11 of the rechargeable battery housing 10 and the main nozzle 100 and the plurality of sub nozzles 200 simultaneously spray thermal interface material 20 to the surface 11 of the rechargeable battery housing 10, the process time and process cost of spraying the thermal interface material 20 on the surface 11 of the rechargeable battery housing 10 are minimized. For example, the injection nozzle 1000 that easily injects the thermal interface material 20 corresponding to the width WI of the surface 11 of the various rechargeable battery housings 10 having various surface areas is provided.

The injection nozzle 1000 according to an embodiment includes the main nozzle 100, the plurality of sub nozzles 200 including a first sub nozzle 210, a second sub nozzle 220, a third sub nozzle 230, and a fourth sub nozzle 240, a first nozzle cap 300, and a second nozzle cap 400.

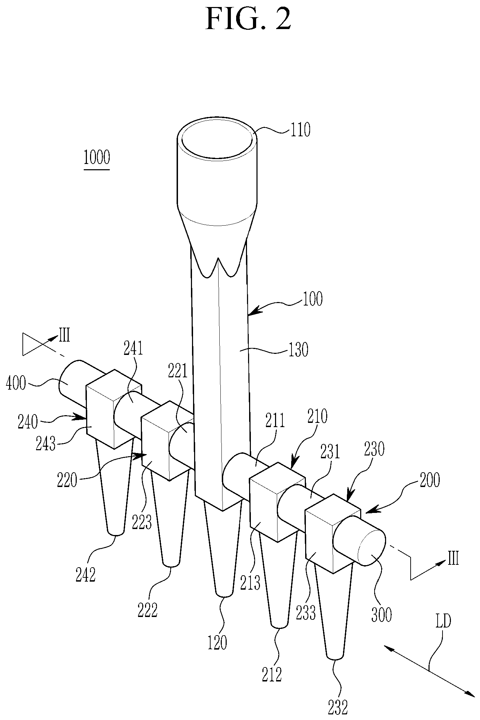

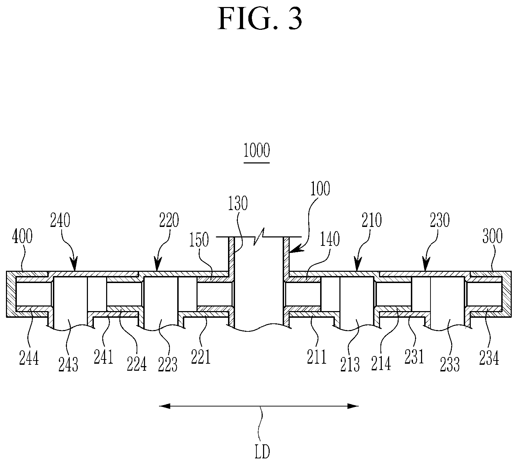

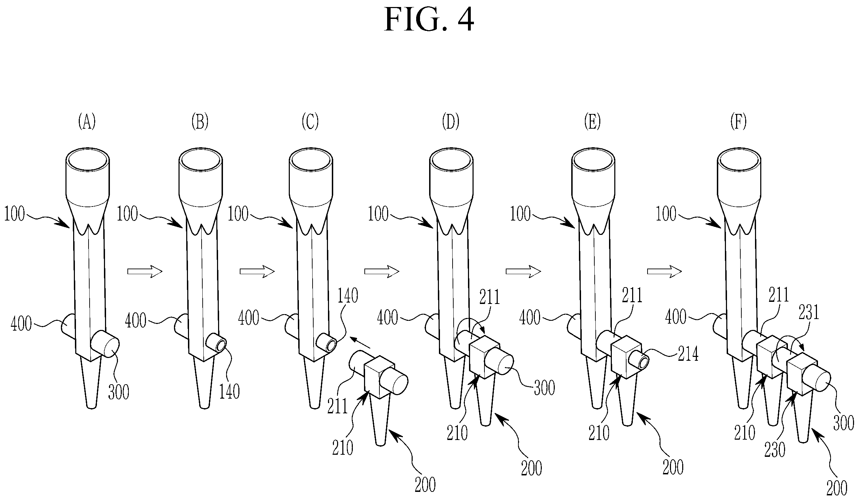

FIG. 2 is a perspective view of the injection nozzle according to an embodiment. FIG. 3 is a cross-sectional view along III-III of FIG. 2. FIG. 4 shows a coupling portion of the injection nozzle according to an embodiment.

Referring to FIG. 2 and FIG. 3, the main nozzle 100 includes an inflow hole 110, an injection hole 120, a main nozzle body 130, a first main coupling portion 140, and a second main coupling portion 150. In other words, the main nozzle 100 comprises: an inflow hole 110 (adapted) for receiving the thermal interface material from the outside; an injection hole 120 (adapted) for spraying the thermal interface material supplied through the inflow hole 110 to the surface of the rechargeable battery housing; and a main nozzle body 130 which is in communication between the inflow hole 110 and the injection hole 120.

The inflow hole 110 is disposed on the main nozzle 100 and receives a thermal interface material supplied from the outside. The inflow hole 110 is connected to various known nozzle moving means such as a pipe or a robot arm, and may receive a thermal interface material from the nozzle moving means. The inflow hole 110 has a circular shape, but is not limited thereto and may have various known shapes.

The injection hole 120 is disposed at a lower portion of the main nozzle 100, and the thermal interface material supplied to the inflow hole 110 is injected to the surface 11 of the rechargeable battery housing 10. The thermal interface material is injected through the main nozzle 100 from the outside through the injection hole 120 to the surface 11 of the rechargeable battery housing 10.

The main nozzle body 130 communicates between the inflow hole 110 and the injection hole 120 between the inflow hole 110 and the injection hole 120. The thermal interface material supplied to the inflow hole 110 through the main nozzle body 130 is moved to the injection hole 120. In the main nozzle 100, a width of a lateral direction LD of the internal space narrows as it goes from the inflow hole 110 through the main nozzle body 130 to the injection hole 120, and as a result, injection speed of the thermal interface material injected to the surface 11 of the rechargeable battery housing through the injection hole 120 is improved.

A first main coupling portion 140 protrudes from a first portion of the main nozzle body 130 in the lateral direction LD and is combined with the first sub nozzle 210 adjacent to the plurality of sub nozzles 200. The first main coupling portion 140 has a circular shape, and a thread is formed on an outer surface of the first main coupling portion 140. The first main coupling portion 140 is inserted into a first sub coupling portion 211 of the first sub nozzle 210, and the first main coupling portion 140 is screwed into the first sub coupling portion 211. The first main coupling portion 140 may have a (male) thread and the first sub coupling portion 211 may have a corresponding (female) thread. The thermal interface material passing through the main nozzle body 130 is moved to the first sub nozzle 210 through the first main coupling portion 140, and the first main coupling portion 140 is inserted into the first sub coupling portion 211 of the first sub nozzle 210 and screwed to the first sub coupling portion 211 such that a leakage of the thermal interface material moving from the main nozzle body 130 to the first sub nozzle 210 to the outside through a space between the first main coupling portion 140 and the first sub coupling portion 211 is suppressed.

The second main coupling portion 150 protrudes into the lateral direction LD from a second portion of the main nozzle body 130, which is positioned on the opposite side of the lateral direction LD of the first portion of the main nozzle body 130, and is combined with a neighboring second sub nozzle 220 of the plurality of sub nozzles 200. The second main coupling portion 150 has a circular shape, and a thread is formed on an outer surface of the second main coupling portion 150. The second main coupling portion 150 is inserted into the second sub coupling portion 221 of the second sub nozzle 220, and the second main coupling portion 150 is screwed to the second sub coupling portion 221. The second main coupling portion 150 may have a (male) thread and the second sub coupling portion 221may have a corresponding (female) thread. The thermal interface material passing through the main nozzle body 130 is moved to the second sub nozzle 220 through the second main coupling portion 150, and the second main coupling portion 150 is inserted into the second sub coupling portion 221 of the second sub nozzle 220 and screwed with the second sub coupling portion 221 such that a leakage of the thermal interface material moving from the main nozzle body 130 to the second sub nozzle 220 to the outside through the gap between the second main coupling portion 150 and the second sub coupling portion 221 is suppressed.

The first sub nozzle 210 is combined with the first main coupling portion 140 of the main nozzle 100 in the lateral direction LD, receives a thermal interface material from the main nozzle 100, and injects the thermal interface material onto the surface of the rechargeable battery housing. The first sub nozzle 210 includes a first sub coupling portion 211, a first sub injection hole 212, a first sub nozzle body 213, and a first extension coupling portion 214. In other words, the first sub nozzle 210 comprises: a first sub coupling portion 211 that is coupled to the first main coupling portion 140 and is suitable for (adapted for) receiving the thermal interface material from the main nozzle body 130;a first sub injection hole 212 (adapted) for spraying the thermal interface material supplied to the first sub coupling portion 211 to the rechargeable battery housing surface; and a first sub nozzle body 213 which is in communication between the first sub coupling portion 211 and the first sub injection hole 212.

The first sub coupling portion 211 is coupled to the first main coupling portion 140 and receives a thermal interface material supply from the main nozzle body 130. The first sub coupling portion 211 has a circular shape, and a thread screwed into the first main coupling portion 140 is formed on an inner surface of the first sub coupling portion 211. The first sub coupling portion 211 covers the first main coupling portion 140 of the main nozzle 100 inserted therein and is screwed to the first main coupling portion 140. The thermal interface material passing through the main nozzle body 130 is moved to the first sub nozzle 210 through the first sub coupling portion 211, and the first sub coupling portion 211 covers the first main coupling portion 140 of the main nozzle 100 inserted therein and is screwed together with the first main coupling portion 140 such that a leakage of the thermal interface material moving from the main nozzle body 130 to the first sub nozzle 210 to the outside through a space between the first main coupling portion 140 and the first sub coupling portion 211 is suppressed.

The first sub injection hole 212 is disposed below the first sub nozzle 210 and injects the thermal interface material supplied to the first sub coupling portion 211 to the surface of the rechargeable battery housing. The thermal interface material is injected from the main nozzle 100 through the first sub injection hole 212 to the surface of the rechargeable battery housing through the first sub nozzle 210.

The first sub nozzle body 213 communicates between the first sub coupling portion 211 and the first sub injection hole 212 between the first sub coupling portion 211 and the first sub injection hole 212. The thermal interface material supplied to the first sub coupling portion 211 through the first sub nozzle body 213 is moved to the first sub injection hole 212. A width of the inner space along the lateral direction LD of the first sub nozzle 210 narrows as it goes from the first sub coupling portion 211 through the first sub nozzle body 213 to the first sub injection hole 212, and as a result, spray speed of the thermal interface material to the surface of the rechargeable battery housing through the first sub injection hole 212 is improved.

The first extension coupling portion 214 is protruded from a portion of the first sub nozzle body 213 positioned on the opposite side of the first sub coupling portion 211 in the lateral direction LD to the lateral direction LD, and is combined with a neighboring third sub nozzle 230 of the plurality of sub nozzles 200. The first extension coupling portion 214 has a circular shape, and a thread is formed on the outer surface of the first extension coupler 214. The first extension coupling portion 214 is inserted into the third sub coupling portion 231 of the third sub nozzle 230, and the first extension coupling portion 214 is screwed to the third sub coupling portion 231. The first extension coupling portion 214 may have a (male) thread and the third sub coupling portion 231 may have a corresponding (female) thread. The thermal interface material passing through the first sub nozzle body 213 is moved to the third sub nozzle 230 through the first extension joint 214, and the first extension coupling portion 214 is inserted into the third sub coupling portion 231 of the third sub nozzle 230 and screwed with the third sub coupling portion 231 such that a leakage of the thermal interface material moving from the first sub nozzle body 213 to the third sub nozzle 230 to the outside through the space between the first extension coupling portion 214 and the third sub coupling portion 231 is suppressed.

The second sub nozzle 220 is combined with the second main coupling portion 150 of the main nozzle 100 in the lateral direction LD, receives the thermal interface material from the main nozzle 100, and injects the thermal interface material onto the surface of the rechargeable battery housing. The second sub nozzle 220 includes a second sub coupling portion 221, a second sub injection hole 222, a second sub nozzle body 223, and a second extension coupling portion 224.

The second sub coupling portion 221 is coupled to the second main coupling portion 150 and receives the thermal interface material supplied from the main nozzle body 130. The second sub coupling portion 221 has a circular shape, and a thread screwed into the second main coupling portion 150 is formed on an inner surface of the second sub coupling portion 221. The second sub coupling portion 221 covers the second main coupling portion 150 of the main nozzle 100 inserted therein and is screwed to the second main coupling portion 150. The thermal interface material passing through the main nozzle body 130 is moved to the second sub nozzle 220 through the second sub coupling portion 221, and the second sub coupling portion 221 covers the second main coupling portion 150 of the main nozzle 100 inserted therein and is screwed together with the second main coupling portion 150 such that a leakage of the thermal interface material moving from the main nozzle body 130 to the second sub nozzle 220 to the outside through a space between the second main coupling portion 150 and the second sub coupling portion 221 is suppressed.

The second sub injection hole 222 is disposed below the second sub nozzle 220 and injects the thermal interface material supplied to the second sub coupling portion 221 to the surface of the rechargeable battery housing. Thermal interface material is injected from the main nozzle 100 through the second sub nozzle 220 to the surface of the rechargeable battery housing through the second sub injection hole 222.

The second sub nozzle body 223 communicates between the second sub coupling portion 221 and the second sub injection hole 222 between the second sub coupling portion 221 and the second sub injection hole 222. The thermal interface material supplied to the second sub coupling portion 221 through the second sub nozzle body 223 is moved to the second sub injection hole 222. In other words, the second sub nozzle 220 comprises: a second sub coupling portion 221 that is combined with the second main coupling portion 150 and is suitable for (adapted for) receiving the thermal interface material supply from the main nozzle body 130; a second sub injection hole 222 (adapted) for injecting the thermal interface material supplied to the second sub coupling portion 221 to the surface of the rechargeable battery housing; and a second sub nozzle body 223 which is in communication between the second sub coupling portion 221 and the second sub injection hole 222. A width of an inner space of the second sub nozzle 220 in the lateral direction LD narrows as it goes from the second sub coupling portion 221 through the second sub nozzle body 223 to the second sub injection hole 222, and as a result, the spraying speed of the thermal interface material sprayed to the surface of the rechargeable battery housing through the second sub injection hole 222 is improved.

The second extension coupler 224 is protruded from a portion of the second sub nozzle body 223 positioned on the opposite side of the second sub coupling portion 221 in the lateral direction LD to the lateral direction LD, and is combined with a neighboring fourth sub nozzle 240 of the plurality of sub nozzles 200. The second extension coupling portion 224 has a circular shape, and a thread is formed on the outer surface of the second extension coupling portion 224. The second extension coupling portion 224 is inserted into the fourth sub coupling portion 241 of the fourth sub nozzle 240, and the second extension coupling portion 224 is screwed into the fourth sub coupling portion 241. The second extension coupling portion 224 may have a (male) thread and the fourth sub coupling portion 241 may have a corresponding (female) thread. The thermal interface material passing through the second sub nozzle body 223 is moved to the fourth sub nozzle 240 through the second extension coupling part 224, and the second extension coupling portion 224 is inserted into the fourth sub coupling portion 241 of the fourth sub nozzle 240 and screwed with the fourth sub coupling portion 241 such that a leakage of the thermal interface material moving from the second sub nozzle body 223 to the fourth sub nozzle 240 to the outside through a space between the second extension coupling portion 224 and the fourth sub coupling portion 241 is suppressed.

The third sub nozzle 230 is combined with the first extension joint 214 of the first sub nozzle 210 in the lateral direction LD, receives the thermal interface material from the first sub nozzle 210, and sprays the thermal interface material to the surface of the rechargeable battery housing. The third sub nozzle 230 includes a third sub coupling portion 231, a third sub injection hole 232, a third sub nozzle body 233, and a third extension coupling portion 234.

The third sub coupling portion 231 is coupled to the first extension coupling portion 214 and receives the thermal interface material from the first sub nozzle body 213. The third sub coupling portion 231 has a circular shape, and a thread screwed into the first extension coupling portion 214 is formed on an inner surface of the third sub coupling portion 231. The third sub coupling portion 231 covers the first extension coupling portion 214 of the first sub nozzle 210 inserted therein and is screwed to the first extension coupling portion 214. The thermal interface material passing through the first sub nozzle body 213 is moved to the third sub nozzle 230 through the third sub coupling portion 231, and the third sub coupling portion 231 covers the first extension coupling portion 214 of the first sub nozzle 210 inserted therein and is screwed with the first extension coupling portion 214 such that a leakage of the thermal interface material moving from the first sub nozzle body 213 to the third sub nozzle 230 to the outside through a space between the first extension coupling portion 214 and the third sub coupling portion 231 is suppressed.

The third sub injection hole 232 is disposed below the third sub nozzle 230, and the thermal interface material supplied to the third sub coupling portion 231 is injected to the surface of the rechargeable battery housing. The thermal interface material is injected from the first sub nozzle 210 through the third sub injection hole 232 through the third sub nozzle 230 to the rechargeable battery housing surface.

The third sub nozzle body 233 communicates between the third sub coupling portion 231 and the third sub injection hole 232 between the third sub coupling portion 231 and the third sub injection hole 232. The thermal interface material supplied to the third sub coupling portion 231 through the third sub nozzle body 233 is moved to the third sub injection hole 232. In other words, the third sub nozzle 230 comprises: a third sub coupling portion 231 coupled to the first extension coupling portion 214 and is suitable for (adapted for) receiving the thermal interface material supply from the first sub nozzle body 213; a third sub injection hole 232 (adapted) for injecting the thermal interface material supplied to the third sub coupling portion 231 to the surface of the rechargeable battery housing; and a third sub nozzle body 233 which is in communication between the third sub coupling portion 231 and the third sub injection hole 232. A width of the internal space in the third sub nozzle 230 in the lateral direction LD narrows as it goes from the third sub coupling portion 231 through the third sub nozzle body 233 to the third sub injection hole 232, and as a result, the spraying speed of the thermal interface material sprayed to the surface of the rechargeable battery housing through the third sub injection hole 232 is improved.

The third extension coupling portion 234 is protruded from a portion of the third sub nozzle body 233 positioned on the opposite side of the third sub coupling portion 231 in the lateral direction LD to the lateral direction LD and coupled to the first nozzle cap 300. The third extension coupling portion 234 has a circular shape, and a thread is formed on an outer surface of the third extension coupling portion 234. The third extension coupling portion 234 is inserted into the first nozzle cap 300, and the third extension coupling portion 234 is screwed to the first nozzle cap 300. The third extension coupling portion 234 may have a (male) thread and the first nozzle cap 300 may have a corresponding (female) thread. As the third extension coupling portion 234 is inserted into the first nozzle cap 300 and screwed to the first nozzle cap 300, and thus a leakage of the thermal interface material passing through the third sub nozzle body 233 to the outside through a space between the third extension coupling portion 234 and the first nozzle cap 300 is suppressed. Meanwhile, in another embodiment, another sub nozzle may be coupled to the third extension coupling portion 234.

The fourth sub nozzle 240 is combined with the second extension coupling portion 224 of the second sub nozzle 220 in the lateral direction LD, receives the thermal interface material from the second sub nozzle 220, and sprays the thermal interface material to the surface of the rechargeable battery housing. The fourth sub nozzle 240 includes a fourth sub coupling portion 241, a fourth sub injection hole 242, a fourth sub nozzle body 243, and a fourth extension coupling portion 244.

The fourth sub coupling portion 241 is coupled to the second extension coupling portion 224 and receives the thermal interface material supplied from the second sub nozzle body 223. The fourth sub coupling portion 241 has a circular shape, and a thread screwed into the second extension coupling portion 224 is formed on an inner surface of the fourth sub coupling portion 241. The fourth sub coupling portion 241 covers the second extension coupling portion 224 of the second sub nozzle 220 inserted therein and is screwed into the second extension coupling portion 224. The thermal interface material passing through the second sub nozzle body 223 is moved to the fourth sub nozzle 240 through the fourth sub coupling portion 241, and the fourth sub coupling portion 241 covers the second extension coupling portion 224 of the second sub nozzle 220 inserted therein and is screwed with the second extension coupling portion 224 such that a leakage of the thermal interface material moving from the second sub nozzle body 223 to the fourth sub nozzle 240 to the outside through a space between the second extension coupling portion 224 and the fourth sub coupling portion 241 is suppressed.

The fourth sub injection hole 242 is disposed below the fourth sub nozzle 240 and injects the thermal interface material supplied to the fourth sub coupling portion 241 to the surface of the rechargeable battery housing. The thermal interface material is injected from the second sub nozzle 220 through the fourth sub injection hole 242 through the fourth sub nozzle 240 to the surface of the rechargeable battery housing.

The fourth sub nozzle body 243 communicates between the fourth sub coupling portion 241 and the fourth sub injection hole 242 between the fourth sub coupling portion 241 and the fourth sub injection hole 242. The thermal interface material supplied to the fourth sub coupling portion 241 through the fourth sub nozzle body 243 is moved to the fourth sub injection hole 242. In other words, the fourth sub nozzle 240 comprises: a fourth sub coupling portion 241 that is coupled to the second extension coupling portion 224 and is suitable for (adapted for) receiving the thermal interface material from the second sub nozzle body 223; a fourth sub injection hole 242 (adapted) for injecting the thermal interface material supplied to the fourth sub coupling portion 241 to the surface of the rechargeable battery housing; and a fourth sub nozzle body 243 which is in communication between the fourth sub coupling portion 241 and the fourth sub injection hole 242. A width of an inner space of the fourth sub nozzle 240 in the lateral direction LD narrows as it goes from the fourth sub coupling portion 241 through the fourth sub nozzle body 243 to the fourth sub injection hole 242, and as a result, the spraying speed of the thermal interface material sprayed to the surface of the rechargeable battery housing through the fourth sub injection hole 242 is improved.

The fourth extension coupling portion 244 is protruded from a portion of the fourth sub nozzle body 243 positioned on the opposite side of the fourth sub coupling portion 241 in the lateral direction LD to the lateral direction LD and coupled to the second nozzle cap 400. The fourth extension coupling 244 has a circular shape, and a thread is formed on an outer surface of the fourth extension coupler 244. The fourth extension coupling portion 244 is inserted into the second nozzle cap 400, and the fourth extension coupling portion 244 is screwed into the second nozzle cap 400. The fourth extension coupling portion 244 may have a (male) thread and the second nozzle cap 400 may have a corresponding (female) thread. As the fourth extension coupling portion 244 is inserted into the second nozzle cap 400 and screwed to the second nozzle cap 400, a leakage of the thermal interface material passing through the fourth sub nozzle body 243 to the outside through a space between the fourth extension coupling portion 244 and the second nozzle cap 400 is suppressed. Meanwhile, in another embodiment, another sub nozzle may be coupled to the fourth extension coupler 244.

The first nozzle cap 300 is combined with the third extension coupling portion 234 of the third sub nozzle 230. The first nozzle cap 300 is screwed into the third extension coupling portion 234 inserted therein. Since the first nozzle cap 300 is screwed into the third extension coupling part 234 inserted into the inside, a leakage of the thermal interface material passing through the third sub nozzle body 233 to the outside through a space between the third extension coupling portion 234 and the first nozzle cap 300 is suppressed.

The second nozzle cap 400 is combined with the fourth extension coupling part 244 of the fourth sub nozzle 240. The second nozzle cap 400 is screwed into the fourth extension coupling portion 244 inserted therein. Since the second nozzle cap 400 is screwed into the inserted fourth extension coupling part 244, a leakage of the thermal interface material passing through the fourth sub nozzle body 243 to the outside through a space between the fourth extension coupling portion 244 and the second nozzle cap 400 is suppressed.

Hereinafter, referring to FIG. 4, an example of combining the plurality of sub nozzles 200 of the injection nozzle 1000 according to an embodiment will be described.

FIG. 4 is a perspective view that shows a combination of a plurality of sub nozzles of an injection nozzle according to an embodiment.

Referring to (A) of FIG. 4, the first nozzle cap 300 and the second nozzle cap 400 are coupled to each of the first main coupling portion and the second main coupling portion of the main nozzle 100, and thus the thermal interface material can be sprayed using the main nozzle 100.

Referring to (B) of FIG. 4, the first nozzle cap is separated from the first main coupling portion 140 of the main nozzle 100, referring to (C) of FIG. 4, the first main coupling portion 140 of the main nozzle 100 is inserted into the first sub coupling portion 211 of the first sub nozzle 210 to which the first nozzle cap 300 is coupled to the first extension coupling portion, and referring to (D) of FIG. 4, and the first sub nozzle 210 is rotated to screw the first sub coupling portion 211 of the first sub nozzle 210 into the first main coupling portion 140 of the main nozzle 100 such that the thermal interface material can be sprayed by using the main nozzle 100 and the first sub nozzle 210.

Referring to (E) of FIG. 4, the first nozzle cap is separated from the first extension coupling portion 214 of the first sub nozzle 210, and referring to (F) of FIG. 4, the first extension coupling portion 214 of the first sub nozzle 210 is inserted into the third sub coupling portion 231 of the third sub nozzle 230 to which the first nozzle cap 300 is coupled to the third extension coupling portion, and the third sub nozzle 230 is rotated to screw the third sub coupling portion 231 of the third sub nozzle 230 to the first extension coupling portion 214 of the first sub nozzle 210 such that the thermal interface material may be sprayed using the main nozzle 100, the first sub nozzle 210, and the second sub nozzle 220.

The above mentioned injection hole 120 and first 112, second 122, third 132 and fourth sub injection holes 142 may be for instance a plain orifice or a shaped orifice with V shaped notch outlet, but they are not limited thereto.

Hereinafter, examples of the injection nozzle 1000 according to an embodiment will be described.

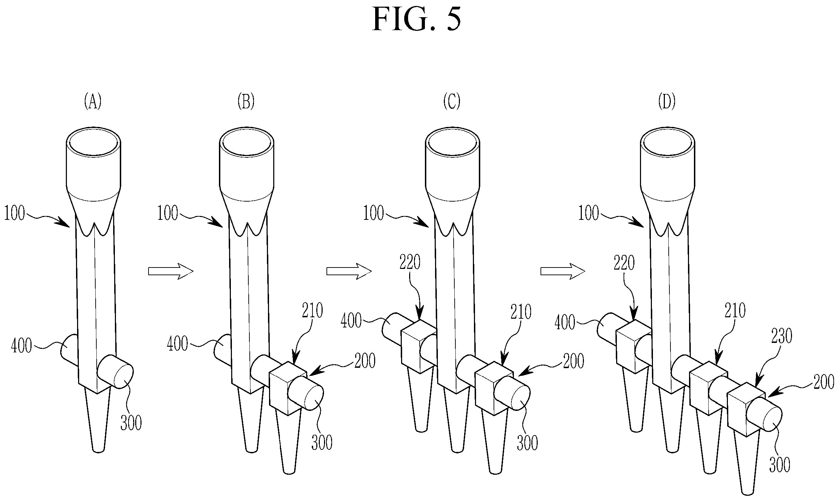

FIG. 5 is a perspective view of examples of the injection nozzle according to an embodiment.

Referring to (A) of FIG. 5, a thermal interface material may be sprayed using an injection nozzle that includes a main nozzle 100 in which a first nozzle cap 300 and a second nozzle cap 400 are respectively coupled to each of a first main coupling portion and a second main coupling portion of the main nozzle 100 corresponding to one width of the surface of the rechargeable battery housing.

Referring to (B) of FIG. 5, a thermal interface material may be sprayed using an injection nozzle that includes a main nozzle 100 in which a first sub nozzle 210 and a second nozzle cap 400 are respectively coupled to each of a first main coupling portion and a second main coupling portion of the main nozzle 100, and a first sub nozzle 210 corresponding to another width of the surface of the rechargeable battery housing.

Referring to (C) of FIG. 5, a thermal interface material may be injected using an injection nozzle that includes a main nozzle 100 in which a first sub nozzle 210 and a second sub nozzle 210 are respectively coupled to each of the first main coupling portion and the second main coupling portion of the main nozzle 100, and the first sub nozzle 210, and the second nozzle 220 corresponding to another width of the surface of the rechargeable battery housing.

Referring to (D) of FIG. 5, a thermal interface material may be injected using an injection nozzle that includes a main nozzle 100 that includes a main nozzle 100 in which a first sub nozzle 210 and a second sub nozzle 220 are respectively coupled to the first main coupling portion and the second main coupling portion, and a third sub nozzle 230 is coupled to the first sub nozzle 210, the second sub nozzle 220, and the third sub nozzle 230.

As described above, in the injection nozzle 1000 according to an embodiment, the plurality of sub nozzles 200 including the first sub nozzle 210, the second sub nozzle 220, the third sub nozzle 230, and the fourth sub nozzle 240 are selectively combined with the main nozzle 100 with a number correspond to the width WI of the surface 11 of the rechargeable battery housing 10 and thus the main nozzle 100 and the plurality of sub nozzles 200 simultaneously spray the thermal interface material 20 on the surface 11 of the rechargeable battery housing 10, thereby minimizing the process time and process cost of spraying the thermal interface material 20 on the surface 11 of the rechargeable battery housing 10.

The injection nozzle 1000 according to the embodiment shortens the thermal interface material injection process time for the rechargeable battery housing 10, thereby simplifying the thermal interface material injection process and the logic of the nozzle moving means accordingly, and thus the number of injection reciprocations and injection reciprocations of the nozzle moving means pattern can be minimized. For example, the entire amount of working amount and working time of the nozzle moving means such as a robot arm that moves the injection nozzle 1000 is shortened, the entire battery module and pack manufacturing time is shortened, and productivity is improved.

For example, the injection nozzle 1000 that easily injects the thermal interface material 20 corresponding to the width WI of the surface 11 of the various rechargeable battery housings 10 having various surface areas is provided.

Although an embodiment has been described in detail above, the scope of the present disclosure is not limited thereto but is limited by the scope of the appended claims.

### <Reference List>

- 1000: injection nozzle
- 10: rechargeable battery housing
- 11: surface of rechargeable battery housing
- 20: thermal interface material
- 100: main nozzle
- 110: inflow hole
- 120: injection hole
- 130: main nozzle body
- 140: first main coupling portion
- 150: second main coupling portion
- 200: plurality of sub nozzles
- 210: first sub nozzle
- 211: first sub coupling portion
- 212: first sub injection hole
- 213: first sub nozzle body
- 214: first extension coupling portion
- 220: second sub nozzle
- 221: second sub coupling portion
- 222: second sub injection hole
- 223: second sub nozzle body
- 224: second extension coupling portion
- 230: third sub nozzle
- 231: third sub coupling portion
- 232: third sub injection hole
- 233: third sub nozzle body
- 234: third extension coupling portion
- 240: fourth sub nozzle
- 241: fourth sub coupling portion
- 242: fourth sub injection hole
- 243: fourth sub nozzle body
- 244: fourth extension coupling portion
- 300: first nozzle cap
- 400: second nozzle cap

## Claims

1. A modular injection nozzle (1000) for injecting a thermal interface material onto a surface of a rechargeable battery housing along an injecting direction, comprising:
a main nozzle (100) adapted for receiving the thermal interface material from the outside and adapted for injecting the thermal interface material onto the surface of the rechargeable battery housing, the main nozzle (100) comprises:
an inflow hole (110) adapted for receiving the thermal interface material from the outside,
an injection hole (120) adapted for injecting the thermal interface material supplied through the inflow hole (110) to the surface of the rechargeable battery housing,
a main nozzle body (130) which is in communication between the inflow hole (110) and the injection hole (120), and
a width of a lateral direction, i.e. a direction perpendicular to the injecting direction, of an inner space of the main nozzle (100) is reduced as it goes from the inflow hole (110) through the main nozzle body (130) to the injection hole (120); and
wherein a plurality of sub nozzles (200, 210, 220) is detachably coupled to the main nozzle (100) in the lateral direction, each sub nozzle being adapted for receiving the thermal interface material from the main nozzle (100), and adapted for injecting the thermal interface material onto the surface of the rechargeable battery housing.

2. The modular injection nozzle of claim 1, wherein:
the main nozzle (100) further comprises:
a first main coupling portion (140) protruded in the lateral direction from a first portion of the main nozzle body and combined with an adjacent first sub nozzle (210) among the plurality of sub nozzles (200); and
a second main coupling portion (150) protruded in the lateral direction from a second portion of the main nozzle body disposed on the opposite side of the first portion in a transverse direction and combined with an adjacent second sub nozzle (220) among the plurality of sub nozzles (200).

3. The modular injection nozzle as claimed in claim 2, wherein:
the first sub nozzle (210) comprises:
a first sub coupling portion (211) coupled to the first main coupling portion (140) and for receiving the thermal interface material from the main nozzle body (130);
a first sub injection hole (212) for injecting the thermal interface material supplied to the first sub coupling portion (211) to the rechargeable battery housing surface; and
a first sub nozzle body (213) which is in communication between the first sub coupling portion (211) and the first sub injection hole (212).

4. The modular injection nozzle as claimed in claim 3, wherein:
the first main coupling portion (140) is inserted into and preferably screwed with the first sub coupling portion (211).

5. The modular injection nozzle of one of claims 3 to 4, wherein:
the first sub nozzle (210) further comprises
a first extension coupling portion (214) that is protruded in the transverse direction from a portion of the first sub nozzle body (213) disposed on the opposite side of the first sub coupling portion (211) in the lateral direction and combined with an adjacent third sub nozzle (230) among the plurality of sub nozzles (200).

6. The modular injection nozzle of claim 5, wherein:
the third sub nozzle (230) comprises:
a third sub coupling portion (231) coupled to the first extension coupling portion (214) and suitable for receiving the thermal interface material supply from the first sub nozzle body (213);
a third sub injection hole (232) for injecting the thermal interface material supplied to the third sub coupling portion (231) to the surface of the rechargeable battery housing; and
a third sub nozzle body (233) which is in communication between the third sub coupling portion (231) and the third sub injection hole (232).

7. The modular injection nozzle of one of claims 5 or 6, wherein:
the first extension coupling portion (214) is inserted into and preferably screwed with the third sub coupling portion (231).

8. The modular injection nozzle of one of claims claim 5 to 7, wherein:
the third sub nozzle (230) further comprises a third extension coupling portion (234) protruded in the lateral direction from a portion of the third sub nozzle body disposed on the opposite side of the lateral direction of the third sub coupling portion (231), and
the injection nozzle further comprises a first nozzle cap (300) coupled to the third extension coupling portion (234).

9. The modular injection nozzle of one of claims claim 2 to 8, wherein:
the second sub nozzle (220) comprises:
a second sub coupling portion (221) that is combined with the second main coupling portion (150) and suitable for receiving the thermal interface material supply from the main nozzle body (130);
a second sub injection hole (222) for injecting the thermal interface material supplied to the second sub coupling portion (221) to the surface of the rechargeable battery housing; and
a second sub nozzle body (223) which is in communication between the second sub coupling portion (221) and the second sub injection hole (222).

10. The modular injection nozzle of claim 9, wherein:
the second main coupling portion (150) is inserted into and preferably screwed with the second sub coupling portion (221).

11. The modular injection nozzle of one of claims 9 or 10, wherein:
the second sub nozzle (220) further comprises
a second extension coupling portion (224) protruded in the lateral direction from a portion of the second sub nozzle body disposed on the opposite side of the lateral direction of the second sub coupling portion and combined with an adjacent fourth sub nozzle (240) among the plurality of sub nozzles.

12. The modular injection nozzle as claimed in claim 11, wherein:
the fourth sub nozzle (240) comprises:
a fourth sub coupling portion (241) coupled to the second extension coupling portion (224) and suitable for receiving the thermal interface material from the second sub nozzle body (223);
a fourth sub injection hole (242) for injecting the thermal interface material supplied to the fourth sub coupling portion (241) to the surface of the rechargeable battery housing; and
a fourth sub nozzle body (243) which is in communication between the fourth sub coupling portion (241) and the fourth sub injection hole (242).

13. The modular injection nozzle as claimed in claim 12, wherein:
the second extension coupling portion (224) is inserted into the fourth sub coupling portion (241), and
the second extension coupling portion (224) is screwed with the fourth sub coupling portion (241), and
the fourth sub nozzle (240) further comprises a fourth extension coupling portion (244) protruded in the lateral direction from a portion of the fourth sub nozzle body disposed on the opposite side of the fourth sub coupling portion in the transverse direction, and
the injection nozzle further comprises a second nozzle cap (400) combined with the fourth extension coupling portion (244).

## Patentansprüche

1. Modulare Einspritzdüse (1000) zum Einspritzen eines thermischen Schnittstellenmaterials auf eine Oberfläche eines Gehäuses einer wiederaufladbaren Batterie entlang einer Einspritzrichtung, umfassend:
eine Hauptdüse (100), die dazu ausgelegt ist, das thermische Schnittstellenmaterial von außen aufzunehmen und das thermische Schnittstellenmaterial auf die Oberfläche des Gehäuses der wiederaufladbaren Batterie einzuspritzen, wobei die Hauptdüse (100) Folgendes Folgendes umfasst:
ein Einströmloch (110), das dazu ausgelegt ist, das thermische Schnittstellenmaterial von außen aufzunehmen,
ein Einspritzloch (120), das dazu ausgelegt ist, das durch das Einströmloch (110) zugeführte thermische Schnittstellenmaterial auf die Oberfläche des Gehäuses der wiederaufladbaren Batterie einzuspritzen,
einen Hauptdüsenkörper (130), der in Verbindung zwischen dem Einströmloch (110) und dem Einspritzloch (120) steht, und
eine Breite in einer seitlichen Richtung, d.h. einer Richtung senkrecht zur Einspritzrichtung, eines Innenraums der Hauptdüse (100) abnimmt, wenn sie von dem Einströmloch (110) durch den Hauptdüsenkörper (130) zum Einspritzloch (120) verläuft; und
wobei eine Vielzahl von Unterdüsen (200, 210, 220) in der seitlichen Richtung lösbar mit der Hauptdüse (100) gekoppelt ist, wobei jede Unterdüse dazu ausgelegt ist, das thermische Schnittstellenmaterial von der Hauptdüse (100) aufzunehmen und das thermische Schnittstellenmaterial auf die Oberfläche des Gehäuses der wiederaufladbaren Batterie einzuspritzen.

2. Modulare Einspritzdüse nach Anspruch 1, wobei:
die Hauptdüse (100) ferner Folgendes Folgendes umfasst:
einen ersten Hauptkopplungsabschnitt (140), der in der seitlichen Richtung von einem ersten Abschnitt des Hauptdüsenkörpers vorsteht und mit einer benachbarten ersten Unterdüse (210) unter den mehreren Unterdüsen (200) kombiniert ist; und
einen zweiten Hauptkopplungsabschnitt (150), der in der seitlichen Richtung von einem zweiten Abschnitt des Hauptdüsenkörpers, der auf der gegenüberliegenden Seite des ersten Abschnitts in einer Querrichtung angeordnet ist, vorsteht und mit einer benachbarten zweiten Unterdüse (220) unter den mehreren Unterdüsen (200) kombiniert ist.

3. Modulare Einspritzdüse nach Anspruch 2, wobei:
die erste Unterdüse (210) Folgendes Folgendes umfasst:
einen ersten Unterkopplungsabschnitt (211), der mit dem ersten Hauptkopplungsabschnitt (140) gekoppelt ist und dazu dient, das thermische Schnittstellenmaterial aus dem Hauptdüsenkörper (130) aufzunehmen;
ein erstes Untereinspritzloch (212) zum Einspritzen des dem ersten Unterkopplungsabschnitt (211) zugeführten thermischen Schnittstellenmaterials auf die Oberfläche des Gehäuses der wiederaufladbaren Batterie; und
einen ersten Unterdüsenkörper (213), der in Verbindung zwischen dem ersten Unterkopplungsabschnitt (211) und dem ersten Untereinspritzloch (212) steht.

4. Modulare Einspritzdüse nach Anspruch 3, wobei:
der erste Hauptkopplungsabschnitt (140) in den ersten Unterkopplungsabschnitt (211) eingeführt und vorzugsweise mit diesem verschraubt ist.

5. Modulare Einspritzdüse nach einem der Ansprüche 3 bis 4, wobei:
die erste Unterdüse (210) ferner Folgendes Folgendes umfasst:
einen ersten Erstreckungskopplungsabschnitt (214), der in der Querrichtung von einem Abschnitt des ersten Unterdüsenkörpers (213), der auf der gegenüberliegenden Seite des ersten Unterkopplungsabschnitts (211) in der seitlichen Richtung angeordnet ist, vorsteht und mit einer benachbarten dritten Unterdüse (230) unter den mehreren Unterdüsen (200) kombiniert ist.

6. Modulare Einspritzdüse nach Anspruch 5, wobei:
die dritte Unterdüse (230) Folgendes umfasst:
einen dritten Unterkopplungsabschnitt (231), der mit dem ersten Erstreckungskopplungsabschnitt (214) gekoppelt und zur Aufnahme der Zufuhr des thermischen Schnittstellenmaterials aus dem ersten Unterdüsenkörper (213) geeignet ist;
ein drittes Untereinspritzloch (232) zum Einspritzen des dem dritten Unterkopplungsabschnitt (231) zugeführten thermischen Schnittstellenmaterials auf die Oberfläche des Gehäuses der wiederaufladbaren Batterie; und
einen dritten Unterdüsenkörper (233), der in Verbindung zwischen dem dritten Unterkopplungsabschnitt (231) und dem dritten Untereinspritzloch (232) steht.

7. Modulare Einspritzdüse nach einem der Ansprüche 5 oder 6, wobei:
der erste Erstreckungskopplungsabschnitt (214) in den dritten Unterkopplungsabschnitt (231) eingeführt und vorzugsweise mit diesem verschraubt ist.

8. Modulare Einspritzdüse nach einem der Ansprüche 5 bis 7, wobei:
die dritte Unterdüse (230) ferner einen dritten Erstreckungskopplungsabschnitt (234) umfasst, der in der seitlichen Richtung von einem Abschnitt des dritten Unterdüsenkörpers vorsteht, der auf der gegenüberliegenden Seite der seitlichen Richtung des dritten Unterkopplungsabschnitts (231) angeordnet ist, und
die Einspritzdüse ferner eine erste Düsenkappe (300) umfasst, die mit dem dritten Erstreckungskopplungsabschnitt (234) gekoppelt ist.

9. Modulare Einspritzdüse nach einem der Ansprüche 2 bis 8, wobei:
die zweite Unterdüse (220) Folgendes umfasst:
einen zweiten Unterkopplungsabschnitt (221), der mit dem zweiten Hauptkopplungsabschnitt (150) kombiniert und zur Aufnahme der Zufuhr des thermischen Schnittstellenmaterials aus dem Hauptdüsenkörper (130) geeignet ist;
ein zweites Untereinspritzloch (222) zum Einspritzen des dem zweiten Unterkopplungsabschnitt (221) zugeführten thermischen Schnittstellenmaterials auf die Oberfläche des Gehäuses der wiederaufladbaren Batterie; und
einen zweiten Unterdüsenkörper (223), der in Verbindung zwischen dem zweiten Unterkopplungsabschnitt (221) und dem zweiten Untereinspritzloch (222) steht.

10. Modulare Einspritzdüse nach Anspruch 9, wobei:
der zweite Hauptkopplungsabschnitt (150) in den zweiten Unterkopplungsabschnitt (221) eingeführt und vorzugsweise mit diesem verschraubt ist.

11. Modulare Einspritzdüse nach einem der Ansprüche 9 oder 10, wobei:
die zweite Unterdüse (220) ferner Folgendes umfasst:
einen zweiten Erstreckungskopplungsabschnitt (224), der in der seitlichen Richtung von einem Abschnitt des zweiten Unterdüsenkörpers, der auf der gegenüberliegenden Seite der seitlichen Richtung des zweiten Unterkopplungsabschnitts angeordnet ist, vorsteht und mit einer benachbarten vierten Unterdüse (240) unter den mehreren Unterdüsen kombiniert ist.

12. Modulare Einspritzdüse nach Anspruch 11, wobei:
die vierte Unterdüse (240) Folgendes umfasst:
einen vierten Unterkopplungsabschnitt (241), der mit dem zweiten Erstreckungskopplungsabschnitt (224) gekoppelt und zur Aufnahme des thermischen Schnittstellenmaterials aus dem zweiten Unterdüsenkörper (223) geeignet ist;
ein viertes Untereinspritzloch (242) zum Einspritzen des dem vierten Unterkopplungsabschnitt (241) zugeführten thermischen Schnittstellenmaterials auf die Oberfläche des Gehäuses der wiederaufladbaren Batterie; und
einen vierten Unterdüsenkörper (243), der in Verbindung zwischen dem vierten Unterkopplungsabschnitt (241) und dem vierten Untereinspritzloch (242) steht.

13. Modulare Einspritzdüse nach Anspruch 12, wobei:
der zweite Erstreckungskopplungsabschnitt (224) in den vierten Unterkopplungsabschnitt (241) eingeführt ist, und
der zweite Erstreckungskopplungsabschnitt (224) mit dem vierten Unterkopplungsabschnitt (241) verschraubt ist, und
die vierte Unterdüse (240) ferner einen vierten Erstreckungskopplungsabschnitt (244) umfasst, der in der seitlichen Richtung von einem Abschnitt des vierten Unterdüsenkörpers vorsteht, der auf der gegenüberliegenden Seite des vierten Unterkopplungsabschnitts in der Querrichtung angeordnet ist, und
die Einspritzdüse ferner eine zweite Düsenkappe (400) umfasst, die mit dem vierten Erstreckungskopplungsabschnitt (244) kombiniert ist.

## Revendications

1. Buse d'injection modulaire (1000) destinée à injecter un matériau d'interface thermique sur une surface d'un boîtier de batterie rechargeable le long d'une direction d'injection, comprenant :
une buse principale (100) adaptée à recevoir le matériau d'interface thermique depuis l'extérieur et adaptée à injecter le matériau d'interface thermique sur la surface du boîtier de batterie rechargeable, la buse principale (100) comprenant :
un orifice d'entrée (110) adapté à recevoir le matériau d'interface thermique depuis l'extérieur,
un orifice d'injection (120) adapté à injecter le matériau d'interface thermique fourni à travers l'orifice d'entrée (110) sur la surface du boîtier de batterie rechargeable,
un corps de buse principale (130) qui est en communication entre l'orifice d'entrée (110) et l'orifice d'injection (120), et
une largeur d'une direction latérale, c'est-à-dire d'une direction perpendiculaire à la direction d'injection, d'un espace interne de la buse principale (100) est réduite lorsqu'elle passe de l'orifice d'entrée (110) à travers le corps de buse principale (130) à l'orifice d'injection (120) ; et
dans laquelle une pluralité de buses secondaires (200, 210, 220) sont accouplées de manière amovible à la buse principale (100) dans la direction latérale, chaque buse secondaire étant adaptée à recevoir le matériau d'interface thermique de la buse principale (100), et adaptée à injecter le matériau d'interface thermique sur la surface du boîtier de batterie rechargeable.

2. Dispositif d'injection selon la revendication 1, dans lequel :
la buse principale (100) comprend en outre :
une première partie d'accouplement principale (140) faisant saillie dans la direction latérale à partir d'une première partie du corps de buse principale et combinée à une première buse secondaire adjacente (210) parmi la pluralité de buses secondaires (200) ; et
une deuxième partie d'accouplement principale (150) faisant saillie dans la direction latérale à partir d'une deuxième partie du corps de buse principale disposée sur le côté opposé de la première partie dans une direction transversale et combinée à une deuxième buse secondaire adjacente (220) parmi la pluralité de buses secondaires (200).

3. Buse d'injection modulaire selon la revendication 2, dans laquelle :
la première buse secondaire (210) comprend :
une première partie d'accouplement secondaire (211) accouplée à la première partie d'accouplement principale (140) et destinée à recevoir le matériau d'interface thermique du corps de buse principale (130) ;
un premier orifice d'injection secondaire (212) destiné à injecter le matériau d'interface thermique fourni à la première partie d'accouplement secondaire (211) sur la surface de boîtier de batterie rechargeable ; et
un premier corps de buse secondaire (213) qui est en communication entre la première partie d'accouplement secondaire (211) et le premier orifice d'injection secondaire (212).

4. Buse d'injection modulaire selon la revendication 3, dans laquelle :
la première partie d'accouplement principale (140) est insérée dans et de préférence vissée avec la première partie d'accouplement secondaire (211).

5. Buse d'injection modulaire selon l'une des revendications 3 à 4, dans laquelle :
la première buse secondaire (210) comprend en outre
une première partie d'accouplement d'extension (214) qui fait saillie dans la direction transversale à partir d'une partie du premier corps de buse secondaire (213) disposé sur le côté opposé de la première partie d'accouplement secondaire (211) dans la direction latérale et combinée à une troisième buse secondaire adjacente (230) parmi la pluralité de buses secondaires (200).

6. Dispositif d'injection selon la revendication 5, dans lequel :
la troisième buse secondaire (230) comprend :
une troisième partie d'accouplement secondaire (231) accouplée à la première partie d'accouplement d'extension (214) et adaptée à recevoir l'alimentation en matériau d'interface thermique du premier corps de buse secondaire (213) ;
un troisième orifice d'injection secondaire (232) destiné à injecter le matériau d'interface thermique fourni à la troisième partie d'accouplement secondaire (231) sur la surface du boîtier de batterie rechargeable ; et
un troisième corps de buse secondaire (233) qui est en communication entre la troisième partie d'accouplement secondaire (231) et le troisième orifice d'injection secondaire (232).

7. Buse d'injection modulaire selon l'une des revendications 5 ou 6, dans laquelle :
la première partie d'accouplement d'extension (214) est insérée dans et de préférence vissée avec la troisième partie d'accouplement secondaire (231).

8. Buse d'injection modulaire selon l'une des revendications 5 à 7, dans laquelle :
la troisième buse secondaire (230) comprend en outre une troisième partie d'accouplement d'extension (234) faisant saillie dans la direction latérale à partir d'une partie du troisième corps de buse secondaire disposée sur le côté opposé à la direction latérale de la troisième partie d'accouplement secondaire (231), et
la buse d'injection comprend en outre un premier capuchon de buse (300) accouplé à la troisième partie d'accouplement d'extension (234).

9. Buse d'injection modulaire selon l'une des revendications 2 à 8, dans laquelle :
la deuxième buse secondaire (220) comprend :
une deuxième partie d'accouplement secondaire (221) qui est combinée à la deuxième partie d'accouplement principale (150) et adaptée à recevoir l'alimentation en matériau d'interface thermique du corps de buse principale (130) ;
un deuxième orifice d'injection secondaire (222) destiné à injecter le matériau d'interface thermique fourni à la deuxième partie d'accouplement secondaire (221) sur la surface du boîtier de batterie rechargeable ; et
un deuxième corps de buse secondaire (223) qui est en communication entre la deuxième partie d'accouplement secondaire (221) et le deuxième orifice d'injection secondaire (222).

10. Dispositif d'injection modulaire selon la revendication 9, dans lequel :
la deuxième partie d'accouplement principale (150) est insérée dans et de préférence vissée avec la deuxième partie d'accouplement secondaire (221).

11. Buse d'injection modulaire selon l'une des revendications 9 ou 10, dans laquelle :
la deuxième buse secondaire (220) comprend en outre
une deuxième partie d'accouplement d'extension (224) faisant saillie dans la direction latérale à partir d'une partie du deuxième corps de buse secondaire disposée sur le côté opposé à la direction latérale de la deuxième partie d'accouplement secondaire et combinée à une quatrième buse secondaire adjacente (240) adjacente parmi la pluralité de buses secondaires.

12. Buse d'injection modulaire selon la revendication 11, dans laquelle :
la quatrième buse secondaire (240) comprend :
une quatrième partie d'accouplement secondaire (241) accouplée à la deuxième partie d'accouplement d'extension (224) et adaptée à recevoir le matériau d'interface thermique du deuxième corps de buse secondaire (223) ;
un quatrième orifice d'injection secondaire (242) destiné à injecter le matériau d'interface thermique fourni à la quatrième partie d'accouplement secondaire (241) sur la surface du boîtier de batterie rechargeable ; et
un quatrième corps de buse secondaire (243) qui est en communication entre la quatrième partie d'accouplement secondaire (241) et le quatrième orifice d'injection secondaire (242).

13. Buse d'injection modulaire selon la revendication 12, dans laquelle :
la deuxième partie d'accouplement d'extension (224) est insérée dans la quatrième partie d'accouplement secondaire (241), et
la deuxième partie d'accouplement d'extension (224) est vissée avec la quatrième partie d'accouplement secondaire (241), et
la quatrième buse secondaire (240) comprend en outre une quatrième partie d'accouplement d'extension (244) faisant saillie dans la direction latérale à partir d'une partie du quatrième corps de buse secondaire disposé sur le côté opposé de la quatrième partie d'accouplement secondaire dans la direction transversale, et
la buse d'injection comprend en outre un second capuchon de buse (400) combiné à la quatrième partie d'accouplement d'extension (244).
